# EUROPÄISCHE PATENTSCHRIFT

(11) **EP 2 643 162 B1**
(45) Veröffentlichungstag und Bekanntmachung des Hinweises auf die Patenterteilung: **15.08.2018**
(21) Anmeldenummer: 11793706.0
(22) Anmeldetag: 23.11.2011
(51) Int. Cl.: B42D 25/41, B42D 25/30, B32B 38/00, B32B 37/18, B41M 3/14

(54) **WERT- UND/ODER SICHERHEITSDOKUMENT UND VERFAHREN ZU DESSEN HERSTELLUNG**
DOCUMENT OF VALUE AND/OR SECURITY DOCUMENT AND METHOD FOR PRODUCING THE SAME
DOCUMENT DE VALEUR ET/OU DE SÉCURITÉ, AINSI QUE SON PROCÉDÉ DE FABRICATION

(30) Priorität: 26.11.2010 DE 102010062032
(43) Veröffentlichungstag der Anmeldung: 02.10.2013
(73) Patentinhaber: Bundesdruckerei GmbH, 10969 Berlin (DE)
(72) Erfinder: MAGGIONI, Christoph, 10961 Berlin (DE)
(74) Vertreter: Patentanwälte Bressel und Partner mbB
(86) Internationale Anmeldenummer: PCT/EP2011/070809
(87) Internationale Veröffentlichungsnummer: WO 2012/069536

(56) Entgegenhaltungen:
- EP-A1- 0 537 484
- WO-A1-2005/058608
- DE-A1-102007 059 746
- DE-A1-102008 012 436

## Beschreibung

Die vorliegende Erfindung betrifft ein Wert- und/oder Sicherheitsdokument, das mehrere Dokumentenlagen und in oder auf den Dokumentenlagen aus Bildelementen gebildete Muster aufweist sowie ein Verfahren zu dessen Herstellung.

Wert- und/oder Sicherheitsdokumente werden vielfältig eingesetzt. Beispielsweise handelt es sich um Identifikationsdokumente, wie einen Reisepass oder einen Personalausweis, die im Allgemeinen zumindest teilweise aus einem mehrschichtigen Laminat aus Kunststoff bestehen. Derartige Dokumente sind beispielsweise aus DE 10 2008 008 044 A1 bekannt. Danach können kartenförmige Datenträger, insbesondere Sicherheits- und/oder Wertdokumente, beispielsweise durch Laminieren aus mehreren Einzellagen (-folien) hergestellt werden oder auch einlagig ausgeführt sein. Die Einzellagen können beispielsweise aus Polycarbonat (PC), aus thermoplastischem Kunststoff auf Polyurethanbasis (TPU), Acrylnitril/Butadien/Styrol-Copolymer (ABS), Polyethylenterephthalat (PET), Polyethylen, aus einem Verbund aus PC und TPU oder Papier, Pappe oder Gewebe oder aus einem Verbund aus einzelnen dieser Materialien bestehen. Der Kern der Karten kann beispielsweise aus einem Licht absorbierenden oder streuenden Material, wie aus Papier oder aus mit Füllstoffen gefülltem Kunststoff, bestehen, während die Außenlagen aus einem transparenten Material bestehen.

Andere Wert- und/oder Sicherheitsdokumente sind beispielsweise der Führerschein, eine Scheck- oder Kreditkarte, ein Firmenausweis, Berechtigungsausweis oder Mitgliedsausweis, die im Allgemeinen in Form einer Karte im ID-1-Format, ebenfalls laminiert und aus Kunststoff bestehend, zur Verfügung gestellt werden. Auch Banknoten, Schecks, Geschenk- und Einkaufsgutscheine können zumindest zum Teil aus Kunststoffen bestehen. Die genannten Dokumente bestehen jeweils aus mindestens einer Dokumentenlage. Zumindest einige der Dokumentenlagen der genannten ID-1-Karten bestehen vollständig oder zumindest zum Teil aus Kunststoffen.

Die in den Wert- und/oder Sicherheitsdokumenten eingesetzten Sicherheitsmerkmale können ausschließlich dazu dienen, die Echtheit der Dokumente unabhängig von ihrer Art oder von ihrem Benutzer nachzuweisen. Derartige Sicherheitselemente sind beispielsweise Melierfasern, Guillochen, das Spezialpapier von Banknoten und dergleichen. Personalisierende oder andere individualisierende Sicherheitselemente enthalten darüber hinaus in kodierter Form oder auch in Klarschrift eine Information über die Art des Dokuments, den Benutzer dieses Dokuments oder einen Gegenstand, dem das Dokument eindeutig zugeordnet ist. In den letzteren Fällen handelt es sich um individualisierende Sicherheitselemente, im Falle der Zuordnung zu einer Person um personalisierende Sicherheitselemente. Derartige Informationen können ein Photo des Benutzers, seine persönlichen Daten, wie der Name, der Geburtstag, der Geburtsort, die Unterschrift oder eine persönliche Kennung, wie eine Mitglieds-Nr., sein. Ein anderes das Dokument individualisierendes Sicherheitselement kann beispielsweise eine Seriennummer des Dokuments sein.

Ein Sicherheits- oder Wertdokument mit einem individualisierenden Sicherheitselement ist beispielsweise in DE 10 2008 012 423 A1 angegeben. Dieses Sicherheits- oder Wertdokument ist als Polymerschichtverbund ausgebildet, der durch Lamination aus mehreren Substratschichten hergestellt ist und in dem mindestens eine individualisierende Information drucktechnisch gespeichert ist. Die Information ist in dem Verbund in mindestens zwei Druckauszüge zerlegt, die jeweils eine Teilinformation der Information umfassen. Die mindestens zwei Druckauszüge sind in mindestens zwei voneinander beabstandeten Ebenen so angeordnet, dass die gedruckten Druckauszüge in dem Verbund passergenau übereinander liegen und gemeinsam die Information unter einem ersten Betrachtungswinkel wiedergeben und unter einem zweiten Betrachtungswinkel zumindest eine Farbänderung der wiedergegebenen Information eintritt. In einer in diesem Dokument angegebenen Ausführungsform ist vorgesehen, dass ein durch die Information verkörpertes Druckbild in Bildpunkte zerlegt wird und jeder Bildpunkt genau einem der mindestens zwei Druckauszüge zugeordnet wird, sodass nach dem Stapeln der Substratschichten, auf denen die Druckauszüge jeweils aufgebracht sind, entlang einer Schichtungsrichtung oberhalb eines auf einer Substratschicht aufgebrachten Bildpunktes in keiner weiteren darüber angeordneten Substratschicht ein Bildpunkt der Information angeordnet ist. Bei einer anderen in diesem Dokument angegebenen Ausführungsform kann es ferner vorgesehen sein, dass einzelne oder alle Druckauszüge mehrfach, jedoch passergenau auf unterschiedliche voneinander beabstandete Substratschichten gedruckt werden, um beispielsweise eine bessere Deckkraft zu erhalten. Beispielsweise kann der Druck ein Gesichtsbild wiedergeben. Zur Herstellung des Dokuments werden die Druckauszüge auf die Substratschichten gedruckt. Nach dem Laminieren der bedruckten Substratschichten liegen die bedruckten Oberflächen im Inneren des Dokuments.

Ein derartiger Aufbau eines Wert- und/oder Sicherheitsdokuments ist sehr sicher, weil eine Manipulation, beispielsweise ein Austausch der personalisierenden Information durch eine andere Information, nur durch Delaminieren des Dokuments möglich ist. Dies ist sehr schwierig. Daher ist eine derartige Manipulation häufig leicht erkennbar. Allerdings ist die Herstellung derartiger Dokumente auch aufwändig. Insbesondere ist es aus logistischen Gründen zweckmäßig, die Personalisierung des Dokuments nicht von einem zentralen Zulieferer vornehmen zu lassen, sondern von Herstellern, die sich in der Nähe einer das Dokument ausgebenden Stelle befinden, oder von der Ausgabestelle selbst. Hierzu müssen Dokumentenrohlinge zu diesen dezentralen Herstellern oder der Ausgabestelle transportiert werden, was einen erheblichen Aufwand für zusätzliche Sicherheitsvorkehrungen voraussetzt, um zu verhindern, dass die Rohlinge entwendet werden.

Bekannt ist es ferner, durch Lasergravur in einer strahlungsempfindlichen Schicht eine Schwärzung beispielsweise in Form eines Portraitphotos eines Ausweisinhabers, einer Unterschrift oder dergleichen zu erzeugen (EP 0 975 148 A1). Auf diese Art und Weise können Sicherheitselemente mittels Laser beispielsweise auch in einer in einem mehrschichtigen laminierten Trägermaterial innen liegenden Schicht durch Eingravieren erzeugt werden (DE 199 07 940 A1). Allerdings werden durch die Lasergravur dabei ausschließlich Schwärzungen gebildet, sodass das hergestellte individualisierende Sicherheitselement nur in einer Schwarz/Weiß-Darstellung entsteht.

Eine mehrschichtige Wert- oder Ausweiskarte mit farbigen Bildinformationen ist in EP 0 537 484 A1 beschrieben. Die Bildinformationen sind in zwei Bildanteile zerlegt, nämlich einen Hell/Dunkelanteil und einen farbigen Anteil. Beispielsweise der Hell/Dunkelanteil ist fälschungssicher in eine weitgehend transparente Folienschicht eingebracht. Dieses so erzeugte Teilbild wird dann kongruent dem farbigen Anteil der gleichen Bildinformation überlagert. Beispielsweise kann der Hell/Dunkelanteil durch Lasereinschreiben erzeugt werden. Der farbige Anteil wird gemäß einem Beispiel in einer farbaufnehmenden Schicht nach der Fertigstellung der Karte gebildet. In einem anderen Beispiel wird der farbige Anteil in einer innenliegenden Schicht der Karte auf elektrofotographischem Wege erzeugt.

Ein Sicherheits- und/oder Wertdokument mit einer personalisierten graphischen Gesamtinformation ist aus DE 10 2008 012 436 A1 bekannt. Die Gesamtinformation ist beispielsweise aus einer Kombination verschiedener Teilfarbbilder, einem Schwarz/Weiss-Bild und einem oder mehreren verschiedenen diese überlagernden Farb(teil)bildern, gebildet. Die graphischen Teilinformationen sind registergenau übereinander angeordnet. Das Schwarz/Weiss-Bild kann mittels Lasergravieren oder mit einem Druckverfahren hergestellt werden. Die Farb(teil)bilder können mittels eines digitalen Druckverfahrens erzeugt werden.

Ferner ist ein Sicherheits- und/oder Wertdokument mit personalisierten Informationen in DE 10 2007 059 746 A1 offenbart. In diesem Falle wird eine erste personalisierte Information mittels eines Tintenstrahldruckverfahrens als farbige Druckschicht auf einen Polymerschichtteilverbund aufgebracht. Dann wird auf diese Druckschicht eine Polymerdeckschicht auflaminiert. Schließlich wird mittels Lasergravur eine zweite personalisierte Information in den entstandenen Polymerschichtverbund eingebracht. Beide Informationen ergeben eine Gesamtbildinformation.

In WO 2005/058608 A1 ist ein Sicherheitsgegenstand mit einem mehrfarbigen Bild angegeben. Der Gegenstand ist mehrlagig aus transparentem Polymer ausgeführt, wobei die mehreren Lagen jeweils einander deckungsgleich überlagernde Teile des Bildes in verschiedenen Farben tragen.

Es besteht jedoch ein ständiger Bedarf an neuartigen Sicherheitsmerkmalen, insbesondere individualisierenden, beispielsweise personalisierenden, Sicherheitsmerkmalen, die gegen eine Fälschung oder Verfälschung sicher sind und die zur Zuordnung der damit kodierten Information zu dem Benutzer und/oder dem Gegenstand von einer Person leicht erkennbar sind. Hierzu soll sich das Sicherheitsmerkmal in einer gegen Fälschung oder Verfälschung sicheren inneren Dokumentenlage befinden und in einer farbigen, gegebenenfalls bunten, Darstellung erscheinen, die damit eine verbesserte optische Anmutung hat und die zusätzlich einen größeren Informationsgehalt aufweist.

Diese Aufgabe wird gelöst durch das Wert- und/oder Sicherheitsdokument nach Anspruch 1 und das Verfahren zu dessen Herstellung nach Anspruch 12. Bevorzugte Ausführungsformen der Erfindung sind in den Unteransprüchen angegeben.

Soweit in der Erfindungsbeschreibung und in den Ansprüchen der Begriff "Bildelement" verwendet wird, ist darunter ein Bestandteil des Musters in und/oder auf einer Dokumentenlage zu verstehen, der als kleinstes Strukturelement zur Bildung des Musters dient, wobei alle Bildelemente das Muster bilden, sodass das Muster über einen Kontrast gegenüber der Umgebung des Bildelements mit dem Auge wahrnehmbar ist. Das ein Bildelement bildende Material kann entweder transparent, transluzent oder opak sein. Ferner kann es eine bestimmte Helligkeit (Absorption, Remission) haben, d.h. es kann beispielsweise eine Schwärzung, Grautönung oder Weißtönung aufweisen, und/oder es kann eine (spektrale) Färbung und in dieser wiederum eine bestimmte Helligkeit haben. Die Bildelemente können eine kreisförmige (punktförmige), rechteckige, quadratische, sechseckige oder auch noch andere Form aufweisen. Ferner kann jedes Bildelement nochmals aus Bildpunkten zusammengesetzt sein, um eine aus mehreren Basisfarben eines Farbraumes erzeugte Farbe des Bildelements zu bilden. Beispielsweise kann ein Bildelement durch drei eng nebeneinander angeordnete Bildpunkte mit den Basisfarben gelb, magenta und cyan (CMYK-Farbraum) gebildet sein. Auch die Bildpunkte können eine kreisförmige (punktförmige), rechteckige, quadratische, sechseckige oder auch noch andere Form aufweisen. Die flächenmäßigen Anteile der Bildpunkte in einem Bildelement werden in geeigneter Art und Weise gewählt, um einen gewünschten Bildeindruck zu gewinnen. Typischerweise sind die Bildpunkte in jeweils gleicher Anordnung in den Bildelementen enthalten.

Soweit in der Erfindungsbeschreibung und in den Ansprüchen die Begriffe "gerastert" oder "Rasterung" verwendet werden, ist darunter eine Zerlegung eines Bildes in einzelne Bildelemente zu verstehen, die typischerweise regelmäßig, beispielsweise in Zeilen oder auch in einer anderen regelmäßigen Anordnung, angeordnet sind. Die Bildelemente können beispielsweise in einer Wabenanordnung angeordnet sein, insbesondere wenn sie eine sechseckige Form haben. Die Bildelemente können auch, beispielsweise zeilenweise, ineinander übergehen, wenn das Muster unter Einsatz des Antialiasing erstellt ist.

Soweit in der Erfindungsbeschreibung und in den Ansprüchen der Begriff "Muster" verwendet wird, ist darunter eine zweidimensionale Struktur zu verstehen, die beispielsweise durch Aufbringen eines Materials auf eine Dokumentenlage und/oder durch Einbringen des Materials in die Dokumentenlage hinein oder durch Verändern der Dokumentenlage erzeugt wird und mit dem Auge sichtbar ist. Ein Muster ist aus Bildelementen zusammengesetzt, die aber typischerweise mit dem bloßen Auge nicht mehr aufgelöst werden können. Das Muster kann jede abstrakte Form aufweisen und in diesem Falle beispielsweise aus Linien, Flächen, auch in beliebiger Zusammenstellung, oder alternativ aus Zeichen bestehen, wie alphanumerischen Zeichen, oder Bilder wiedergeben, beispielsweise das Photo des Dokumenteninhabers oder Darstellungen von bestimmten Objekten.

Soweit in der Erfindungsbeschreibung und in den Ansprüchen der Begriff "passergenau" verwendet wird, so ist darunter zu verstehen, dass die Bildelemente oder Bildpunkte, die sich in verschiedenen Ebenen, d.h. in oder auf derselben Dokumentenlage oder auf verschiedenen Dokumentenlagen befinden, entsprechend der Rasterung, in der die Bildelemente bzw. Bildpunkte angeordnet sind, unmittelbar übereinander, d.h. bezogen auf die Ebenen der Dokumentenlagen parallel zur Flächennormalen dieser Ebenen übereinander, angeordnet sind, oder alternativ dazu in übereinander angeordneten Ebenen seitlich zueinander versetzt angeordnet sind, d.h. bezogen auf die Ebenen der Dokumentenlagen in einem Winkel >0° zur Flächennormalen dieser Ebenen übereinander, wenn die Ebenen, in denen sich die Bildelemente bzw. Bildpunkte befinden, voneinander beabstandet sind.

Soweit in der Erfindungsbeschreibung und in den Ansprüchen der Begriff "farbig" verwendet wird, so ist darunter die Eigenschaft 'monochrom' und zwar nicht weiß, nicht grau und auch nicht schwarz, d.h. in einer der Basisfarben oder einer Kombinationen der Basisfarben eines Farbraumes, wiedergegeben, oder auch 'mehrfarbig', d.h. aus mehreren Farben zusammengesetzt, zu verstehen.

Das erfindungsgemäße Wert- und/oder Sicherheitsdokument umfasst vorzugsweise mindestens eine Dokumentenlage. Das Dokument kann beispielsweise zusätzlich zu einer ersten Dokumentenlage eine Trägerlage und Außenlagen (Overlay-Folien) enthalten. Das Dokument umfasst ein in einer oder mehreren ersten Ebenen angeordnetes und aus ersten Bildelementen gebildetes erstes Muster, das sich vorzugsweise in und/oder auf mindestens einer ersten der mindestens einen Dokumentenlage befindet, wobei dieses erste Muster entweder jeweils vollständig auf jeder von mehreren ersten Dokumentenlagen vorkommen kann oder auch zerlegt in erste Teilmuster, die jeweils auf einer Oberfläche von einer oder mehreren ersten Dokumentenlagen angeordnet sein können. Ferner umfasst das Dokument ein in einer oder mehreren zweiten Ebenen und aus zweiten Bildelementen gebildetes und zu den ersten Bildelementen des ersten Musters passergenau angeordnetes zweites Muster, das sich vorzugsweise in und/oder auf der mindestens einen ersten Dokumentenlage und/oder in und/oder auf mindestens einer zweiten der mindestens einen Dokumentenlage befindet. Die zweiten Bildelemente befinden sich von einer Sichtseite des Dokuments aus gesehen vor den ersten Bildelementen, sodass sie die darunter liegenden ersten Bildelemente entweder verdecken oder deren optischen Eindruck zumindest modifizieren. Die ersten Dokumentenlagen sind diejenigen Lagen, in und/oder auf denen sich erste Bildelemente und gegebenenfalls auch zweite Bildelemente befinden, und die zweiten Dokumentenlagen sind diejenigen Lagen, in und/oder auf denen sich gegebenenfalls zweite Bildelemente befinden, nicht jedoch erste Bildelemente.

Eine vorzugsweise individualisierende, einschließlich personalisierende, Information wird erfindungsgemäß dadurch erzeugt, dass nur über einem Teil der ersten Bildelemente jeweils ein zweites Bildelement angeordnet ist, d.h. die mindestens eine zweite Ebene, in der sich die zweiten Bildelemente befinden, liegt von der Sichtseite des Dokuments aus gesehen vor der mindestens einen ersten Ebene, in der sich die ersten Bildelemente befinden. Sofern sich über (vor) ersten Bildelementen zweite Bildelemente befinden, sind letztere über den ersten Bildelementen passergenau angeordnet. Dadurch wird der von außen sichtbare Eindruck des ersten Musters so geändert, dass sich durch die Kombination der ersten und zweiten Bildelemente eine Information ergibt. Insgesamt ergibt sich durch die Veränderung des bildlichen Eindruckes des ersten Musters durch das zweite Muster daher ein durch beide Muster hervorgerufener visueller Gesamteindruck, wobei dieser Gesamteindruck nicht nur durch Betrachtung im sichtbaren Spektralbereich, sondern gegebenenfalls auch oder ausschließlich in einem anderen Spektralbereich, insbesondere bei Betrachtung und/oder Anregung im IR- oder im UV-Spektralbereich, verändert wird. Allgemein formuliert, wird das Dokument durch Erzeugung des zweiten Musters in seinen optischen Merkmalen verändert. Dies geschieht beispielsweise dadurch, dass einige der ersten Bildelemente des ersten Musters für einen Betrachter von passergenau darüber liegenden zweiten Bildelementen des zweiten Musters abgedeckt und dadurch gegebenenfalls unsichtbar werden oder alternativ dazu einfach nur verändert werden, sodass ein neues Muster entsteht. Durch die zweiten Bildelemente werden also die Sichtbarkeit und/oder das Aussehen der ersten Bildelemente so modifiziert. Vorzugsweise entsteht ein farbiger Bildeindruck.

Die ersten Bildelemente sind in einer regelmäßigen Anordnung unter Ausbildung eines für Dokumente desselben Typs jeweils identischen Musters gebildet. Die zweiten Bildelemente bilden mit den ersten Bildelementen zusammen eine individualisierende Information.

Der mittels des zusätzlichen zweiten Musters erzeugte Bildeindruck entsteht in einer Ausführungsform der Erfindung, nämlich dann, wenn die zweiten Bildelemente die ersten Bildelemente vollständig verdecken, durch eine Umkehrung des Prinzips des Druckens. Beim Drucken werden durch geeignete Rasterung farbige Bildelemente auf das Substrat, beispielsweise Papier, aufgebracht, die in ihrer Gesamtheit einen bildhaften Eindruck ergeben. Erfindungsgemäß wird ein geeignetes Muster, das durch optische Strukturen (beispielsweise farbige Bildelemente) gebildet wird, in mindestens eine erste Ebene auf und/oder in mindestens eine Dokumentenlage auf- bzw. eingebracht, die unterhalb der zweiten Bildelemente im Dokument liegen. Bei der Herstellung des zweiten Musters werden dann diejenigen ersten Bildelemente, die für die Erzeugung der Information nicht benötigt werden, schwarz, weiß oder anderweitig nicht sichtbar geschaltet. Das Gesamtbild ergibt sich demnach durch ein "Löschen" von Strukturen und nicht durch ein Aufbringen wie beim Drucken.

Zur Herstellung des erfindungsgemäßen Wert- und/oder Sicherheitsdokuments dient das erfindungsgemäße Verfahren, das die folgenden Verfahrensschritte umfasst:
(a) Herstellen eines Dokumentenrohlings durch Erzeugen eines in einer oder mehreren ersten Ebenen angeordneten und aus ersten Bildelementen gebildeten ersten Musters in und/oder auf mindestens einer ersten der mindestens einen Dokumentenlage des Dokumentenrohlings, wobei die ersten Bildelemente in einer regelmäßigen Anordnung gebildet sind und wobei das erste Muster für Dokumente desselben Typs jeweils identisch ist, und
(b) Erzeugen eines in einer oder mehreren zweiten Ebenen angeordneten und aus zweiten Bildelementen gebildeten und mit den ersten Bildelementen des ersten Musters passergenau angeordneten zweiten Musters in und/oder auf der mindestens einen ersten Dokumentenlage und/oder in und/oder auf mindestens einer zweiten der mindestens einen Dokumentenlage, wobei die zweiten Bildelemente mit den ersten Bildelementen zusammen eine individualisierende Information bilden,
wobei in erfindungsgemäßer Art und Weise nur oberhalb eines Teils der ersten Bildelemente in Verfahrensschritt (b) jeweils ein zweites Bildelement erzeugt wird oder dass in Verfahrensschritt (b) nur über einem Teil der ersten Bildelemente jeweils ein bereits vorhandenes zweites Bildelement entfernt wird, sodass über einem komplementären Teil der ersten Bildelemente zweite Bildelemente verbleiben. Somit kann das zweite Muster entweder durch Hinzufügen von Bildelementen zu der Dokumentenlage oder durch Entfernen von dort bereits vorhandenen Bildelementen gebildet werden.

Die mindestens eine erste und gegebenenfalls auch die mindestens eine zweite Dokumentenlage können sich im Inneren eines mehrschichtigen Dokuments, das beispielsweise als Schichtverbund, vorzugsweise als laminierter Schichtverbund, ausgebildet ist, befinden. Hierzu wird die mindestens eine erste Dokumentenlage nach Verfahrensschritt (a) und vor Verfahrensschritt (b) mit weiteren Dokumentenlagen zu einem Laminat verbunden, sodass die mindestens eine erste Dokumentenlage zwischen anderen Dokumentenlagen integriert ist. Mindestens eine der weiteren Dokumentenlagen bildet die mindestens eine zweite Dokumentenlage. Damit wird gewährleistet, dass eine Fälschung oder Verfälschung des Dokuments, beispielsweise durch einen Austausch der beispielsweise individualisierenden, einschließlich personalisierenden, Information oder auch eine Manipulation dieser Information, verhindert oder zumindest erschwert wird. Denn hierzu wäre eine Delamination des Dokuments erforderlich, um zu der die Information enthaltenden Dokumentenlage zu gelangen. Eine Fälschung oder Verfälschung durch Delamination und erneute Lamination ist mit dem erfindungsgemäßen Aufbau praktisch unmöglich, ohne dass die Manipulation nachträglich erkennbar ist, weil es dem Fälscher bei der Re-Lamination nicht gelingen kann, die die zweiten Bildelemente enthaltende(n) Dokumentenlage(n) punktgenau auf die die ersten Bildelemente enthaltende(n) Dokumentenlage(n) zu setzen und mit dieser wieder zu verbinden, sodass die Manipulation bei den heute üblichen Rasterungen von beispielsweise 300 dpi (dots per inch) oder sogar 600 dpi stets bemerkt würde.

Da es mittels diverser Techniken, beispielsweise mittels der Lasergravur, möglich ist, ein beliebiges Muster in einer in einem Dokument enthaltenen inneren Dokumentenlage zu erzeugen, ohne eine äußere Dokumentenlage zu beeinflussen, kann das zweite Muster gebildet werden, wenn ein Dokumentenrohling vorliegt, der bereits alle maßgeblichen Dokumentenlagen enthält, insbesondere auch die Dokumentenlage(n), auf bzw. in der/denen das zweite Muster, in dem die Information verkörpert ist, gebildet werden soll, wenn diese Dokumentenlage(n) in ein Dokument eingebettet ist/sind.

Das erste Muster und das zweite Muster können so aufeinander abgestimmt werden, dass diese bei Betrachtung des Dokuments gemeinsam einen visuellen Eindruck hervorrufen, der die gewünschte Information verkörpert. Hierzu wird das zweite Muster in und/oder auf der mindestens einen ersten und/oder mindestens einen zweiten Dokumentenlage in geeigneter Art und Weise vorzugsweise individualisierend, in jedem Falle als Sicherheitselement des Dokuments, gestaltet. Dagegen ist das sich in und/oder auf der mindestens einen ersten Dokumentenlage befindende erste Muster für alle Dokumente desselben Typs identisch. Beispielsweise können alle Personalausweise ein identisches erstes Muster aufweisen, etwa eine zweidimensionale regelmäßige Anordnung von gedruckten Bildelementen in vorbestimmten Farben. Lediglich durch Einbringen eines zweiten Musters in das Dokument wird dann eine individualisierende Information geschaffen, die durch den durch das erste und das zweite Muster gemeinsam erzeugten visuellen Gesamteindruck verkörpert wird. Werden für die Erzeugung des ersten Musters Bildelemente gebildet, die jeweils einen farbigen Eindruck hervorrufen, kann mit einer Erzeugung beispielsweise eines monochromen zweiten Musters in und/oder auf der mindestens einen ersten und/oder mindestens einen zweiten Dokumentenlage ein farbiger Gesamteindruck geschaffen werden, der die vorzugsweise individualisierende Information verkörpert.

Die gewählten Farben der ersten Bildelemente bzw. von sie bildenden ersten Bildpunkten, deren flächenmäßige Verteilung und Anordnung sowie die optischen Eigenschaften der gewählten zweiten Bildelemente bzw. von diese bildenden Bildpunkten, deren flächenmäßige Verteilung und Anordnung sind für den gewünschten Bildeindruck entscheidend und müssen daher sorgfältig aufeinander abgestimmt werden.

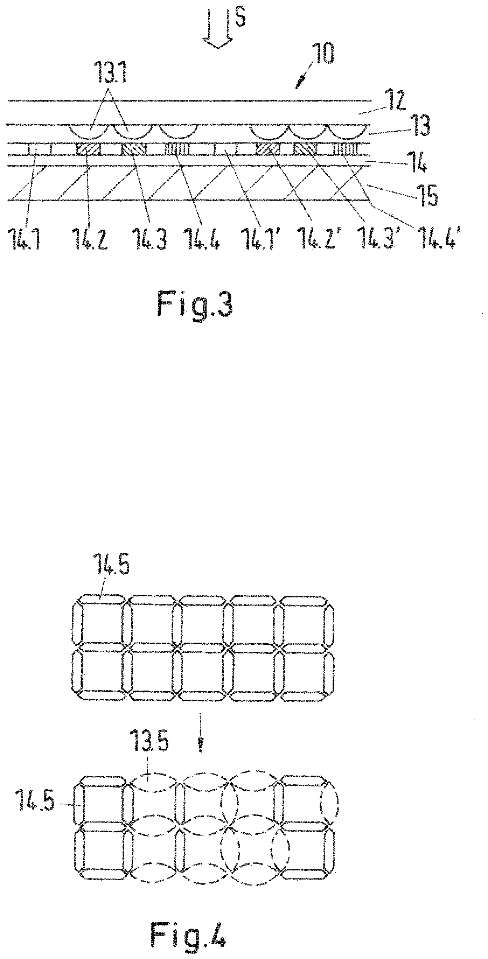

Das zweite Muster kann in einer weiteren Fortbildung der Erfindung derart gestaltet sein, dass es in Alleinstellung keine vorgegebene Information (beispielsweise individualisierende Information) enthält. Diese vorgegebene Information wird aber durch Überlagerung des zweiten Musters mit dem ersten Muster gebildet. Dies kann beispielsweise dadurch realisiert werden, dass ein Teil der vorgegebenen Information in dem ersten Muster und ein Teil dieser Information im zweiten Muster enthalten ist und aus beiden Teilen die vorgegebene Information gebildet wird. Beispielsweise kann das erste Muster durch Zeichensegment-Gesamtheiten gebildet werden, aus denen jeweils alle Zeichen (beispielsweise Zahlenzeichen, Buchstabenzeichen, mathematische Symbole) eines Zeichensatzes gebildet werden können, während das zweite Muster durch Flächenelemente gebildet wird, die einzelne Segmente der Zeichensegment-Gesamtheiten verdecken. Dadurch entstehen aus den noch sichtbaren Segmenten des ersten Musters bestimmte Zeichen, die die vorgegebene Information bilden (siehe hierzu auch das Beispiel von Fig. 4).

Alternativ kann die vorgegebene Information auch bereits durch das zweite Muster vollständig vorgegeben sein.

Auf diese Art und Weise ist es möglich, ein Dokument herzustellen, das eine individualisierende Information in Form einer farbigen Darstellung in oder auf Dokumentenlagen enthält, die sich im Inneren des Dokuments befinden, und zwar auch nach der Herstellung des Dokumentenrohlings, der diese individualisierende Information noch nicht enthält. Dadurch sind die Herstellung des Dokumentenrohlings und ein Transport des Dokumentenrohlings von einem ersten Hersteller zu einem zweiten Dokumentenhersteller in der Nähe der das Dokument ausgebenden Stelle oder zu der Ausgabestelle selbst auch ohne erhöhte Sicherheitsanforderungen möglich.

In einer besonders bevorzugten Ausführungsform der Erfindung sind die ersten Bildelemente farbig. Insbesondere können die ersten Bildelemente beispielsweise jeweils in einer der Basisfarben des CMY- oder CMYK-Farbraumes oder alternativ jeweils auch in einer anderen Farbe einer bestimmten Farbkombination, beispielsweise rot, grün, blau, gebildet sein. Alternativ können die ersten Bildelemente auch schwarz, weiß sein oder ausschließlich in einem Spektralbereich außerhalb des sichtbaren Bereichs absorbieren, beispielsweise im IR- und/oder UV-Bereich. Da das erste Muster für alle Typen eines Dokuments vorzugsweise identisch gebildet sein soll, kann es beispielsweise aus einer regelmäßigen Anordnung von Bildelementen aus den jeweiligen Farben bestehen, wobei sich die Basisfarben in der Anordnung ebenfalls regelmäßig wiederholen. Beispielsweise können die ersten Bildelemente zeilenförmig, vorzugsweise in der Reihung ABABAB... mit jeweils beispielsweise auf Lücke aufeinander folgenden Reihen angeordnet sein (wabenförmige Anordnung), wobei sich die Farben wiederum regelmäßig wiederholen, etwa gemäß CMYKCMYKCMYK.... oder auch GOYSGOYSGOYS... (G: grün, O: orange, Y: gelb, S: schwarz).

In einer bevorzugten Ausführungsform der Erfindung sind die ersten Bildelemente auf die mindestens eine erste Dokumentenlage aufgedruckt. Hierzu werden geeignete Druckfarben oder Druckertinten verwendet. Hiermit lässt sich sehr einfach ein geeignetes erstes Muster, das noch nicht die Information verkörpert, bilden.

Das zweite Muster oberhalb des ersten Musters wird dann beispielsweise derart erzeugt, dass eine Kombination aus den ersten und den zweiten Bildelementen eine farbige Darstellung ergibt. Dies ist dann möglich, wenn die ersten Bildelemente mittels der zweiten Bildelemente selektiv "ausgeschaltet" werden, etwa durch Schwärzung oder durch eine andere Veränderung des Materials in einen opaken Zustand, etwa weiß oder eine andere Farbe, beispielsweise die Farbe der übrigen Dokumentenoberfläche, oberhalb der entsprechenden ersten Bildelemente und zwar jeweils entsprechend der gewünschten Farbverteilung in dem die Information verkörpernden Zielmuster, das sich im Ergebnis für einen Betrachter ergibt. Bei gleichmäßiger Verteilung der Farben der ersten Bildelemente kann ein beliebiger Farbton an jeder Stelle des Zielmusters erzeugt werden, indem die jeweils komplementären Farben im entsprechenden Bereich des Zielmusters mittels des zweiten Musters ausgeblendet werden. Durch geeignete Wahl des Farbraumes für die ersten Bildelemente kann auch ein Farbstich für das Zielmuster erzeugt werden.

In einer bevorzugten Ausführungsform der Erfindung sind die zweiten Bildelemente durch Schwärzung mindestens einer Dokumentenlage, insbesondere der mindestens einen ersten und/oder mindestens einen zweiten Dokumentenlage, gebildet. Beispielsweise können die zweiten Bildelemente unter Lasereinwirkung in mindestens einer Dokumentenlage, vorzugsweise der mindestens einen ersten und/oder mindestens einen zweiten Dokumentenlage, erzeugt werden. Derartige Verfahren sind bekannt. Ein derartiges Verfahren macht sich zum Beispiel das Prinzip zunutze, dass Materialien, die die Laserstrahlung absorbieren, pyrolysieren, sodass sich schwarze Rückstände an den vom Laserstrahl getroffenen Stellen bilden. Beispielsweise ist ein derartiges Prinzip nutzendes Verfahren in DE 29 07 004 C2 beschrieben, das als Offenbarungsgehalt in die vorliegende Anmeldung aufgenommen wird. Ferner kann eine die Laserstrahlung an sich nicht gut absorbierende Dokumentenlage durch zusätzlich eingebrachte Stoffe laserempfindlich gemacht werden. Durch Einstrahlen von Laserlicht kann/können die Dokumentenlage(n) dann in den gewünschten Bereichen mehr oder minder stark geschwärzt werden, sodass sich eine Grau- oder Schwarztönung des Materials ergibt. Hierzu wird ein Laserstrahl in geeigneter Art und Weise über den Dokumenten-Rohling geführt und in seiner Intensität verändert, sodass die optischen Eigenschaften genau der Stellen über den ersten Bildelementen im Dokument verändert, beispielsweise geschwärzt, werden, die für die Konstruktion der (beispielsweise individualisierenden) Information nicht benötigt werden. Eine geeignete Positionierung des Laserstrahls kann beispielsweise durch eine hohe Genauigkeit des Druckvorganges sowie mittels eines hierfür geeigneten bildgebenden Systems, das den Laserstrahl aktiv positioniert, erreicht werden. Ferner ist aus DE 103 16 034 A1 bekannt, dass zur Erzeugung einer gegenüber Licht und Feuchtigkeit langzeitbeständigen Information in einer Dokumentenlage in lokalisierten Teilbereichen Reaktionsbedingungen eingestellt werden, die in der Dokumentenlage enthaltene Ausgangsstoffe zur einer Synthesereaktion veranlassen. Hiermit können auch farbige Muster erzeugt werden, beispielsweise blaue, grüne, gelbe, rote sowie auch farbig fluoreszierende Muster. Dieses Verfahren wird ebenfalls in den Offenbarungsgehalt der vorliegenden Anmeldung aufgenommen. Ferner können auch in einer Dokumentenlage enthaltene Farbstoffe, insbesondere organische Farbstoffe, durch Einwirkung von elektromagnetischer Strahlung, beispielsweise Laserbestrahlung im sichtbaren oder UV-Bereich, ausgebleicht werden. Während die beiden ersten Varianten davon ausgehen, dass das zweite Muster durch Hinzufügen von zweiten Bildelementen zur Dokumentenlage gebildet wird, geht die dritte Variante davon aus, dass das zweite Muster durch Entfernen von Material zur Dokumentenlage gebildet wird.

Alternativ kann ein photoempfindliches Folienmaterial für die Dokumentenlage verwendet werden. Derartige Materialien werden in der Photolithographie verwendet und bilden je nach dem Aufbau der Materialien Muster in unterschiedlicher Helligkeit und gegebenenfalls unterschiedlichen Färbungen bei entsprechender Belichtung, beispielsweise mit einer im sichtbaren und/oder im UV-Bereich arbeitenden Laservorrichtung.

Grundsätzlich kann das zweite Muster ausschließlich in schwarz/grau/weiß mit unterschiedlichen Helligkeiten oder gefärbt sein. Das Dokumentenmaterial kann im Bereich der zweiten Bildelemente transparent oder transluzent (durchscheinend, aber Licht streuend) sein. Alternativ kann das Dokument im Bereich der zweiten Bildelemente opak oder semitransparent sein. Ein opaker Zustand des Dokuments zur Bildung eines zweiten Bildelements kann durch Erniedrigung der Lichtdurchlässigkeit und/oder durch Erhöhung der Streuung des Materials erreicht werden. Beispielsweise kann der opake Zustand durch eine Schwärzung, Weißung, Einfärbung mit einem absorbierenden Farbmittel oder Pigment, durch einen Farbumschlag eines an sich bereits gefärbten Materials oder auch durch irgendein anderes Verfahren herbeigeführt werden.

Die die zweiten Bildelemente bildenden Materialien des Dokuments weisen demnach unterschiedliche Tönungen und/oder Färbungen auf. Deren Farbe und/oder Lichtdurchlässigkeit kann je nach den Anforderungen unterschiedlich sein. Durch geeignete Anordnung und Gestaltung der zweiten Bildelemente werden jeweils unterschiedliche Bildeindrücke der darunter liegenden ersten Bildelemente und damit des Zielmusters erzeugt. Denn im Falle eines mit einem transparenten Material gebildeten zweiten Bildelements kann ein unter dem entsprechend gebildeten zweiten Bildelement liegendes erstes Bildelement noch erkannt werden, sodass das erste Bildelement in diesem Falle den Bildeindruck in diesem Falle mitprägt. Dies ist anders im Falle zweiter Bildelemente, die durch ein opakes Material gebildet werden. Selbstverständlich wird der Gesamtbildeindruck daher maßgeblich durch die Helligkeit, Färbung sowie Lichtdurchlässigkeit der Materialbereiche, die die zweiten Bildelemente bilden, geprägt. Beispielsweise werden opake rote zweite Bildelemente zu einem roten Gesamterscheinungsbild des Zielmusters führen. Dasselbe gilt aber auch, wenn die roten zweiten Bildelemente transparent, transluzent oder semitransparent sind.

Somit ist das die jeweiligen zweiten Bildelemente bildende Material hinsichtlich unterschiedlicher optischer Eigenschaften zu charakterisieren, nämlich durch die Absorption und/oder Remission, die gegebenenfalls jeweils eine spektrale Abhängigkeit insbesondere im sichtbaren Spektralbereich haben können.

Weiterhin kann das die zweiten Bildelemente bildende Material auch eine Lumineszenz und zwar im IR-, sichtbaren und/oder UV-Spektralbereich aufweisen, wobei die Lumineszenz gegebenenfalls eine spektrale Abhängigkeit haben kann. Es kann ferner mindestens zwei Gruppen von unterschiedlichen zweiten Bildelementen geben, die sich jeweils hinsichtlich der optischen Eigenschaften unterscheiden. Beispielsweise kann eine erste Gruppe von zweiten Bildelementen lediglich in schwarz/grau/weiß, insbesondere schwarz, oder auch farbig absorbierend gebildet sein und eine zweite Gruppe von zweiten Bildelementen weiß oder farbig lumineszierend, wenn diese zweiten Bildelemente mit sichtbarer oder UV-Strahlung angeregt werden. Diese weiteren zweiten Bildelemente können eine weitere Information verkörpern, etwa ein nicht individualisierendes Sicherheitsmerkmal, wie ein Wappen oder Guillochen, oder ein individualisierendes Merkmal, beispielsweise den Wert einer Banknote oder die Unterschrift oder den Namen des Dokumenteninhabers. Die die zweiten Bildelemente bildenden Materialien können aber zusätzlich zu einer im sichtbaren Spektralbereich liegenden Absorption und Remission auch eine Lumineszenz aufweisen.

Desgleichen kann auch das die ersten Bildelemente bildende Material hinsichtlich unterschiedlicher optischer Eigenschaften charakterisiert sein, nämlich durch dessen Absorption und/oder Remission, die gegebenenfalls jeweils eine spektrale Abhängigkeit insbesondere im sichtbaren Spektralbereich haben können.

Weiterhin kann auch das die ersten Bildelemente bildende Material lumineszierend sein und zwar im IR-, sichtbaren und/oder UV-Spektralbereich, wobei die Lumineszenz ebenfalls gegebenenfalls eine spektrale Abhängigkeit haben kann. Das die ersten Bildelemente bildende Material kann zusätzlich zu einer im sichtbaren Spektralbereich liegenden Absorption und Remission auch eine ebenfalls im sichtbaren Spektralbereich liegende Lumineszenz aufweisen. Damit kann ein insgesamt helleres Bild erzeugt werden, insbesondere wenn die ersten Bildelemente im sichtbaren Spektralbereich weiß oder zumindest breitbandig lumineszieren. Hierzu kann das die ersten Bildelemente bildende Material ein oder mehrere geeignete Pigmente enthalten. Eine derartige Aufhellung ist insbesondere dann vorteilhaft, wenn die zweiten Bildelemente durch Schwärzung erzeugt werden, was einen Helligkeitsverlust verursacht.

Ferner kann es mindestens zwei Gruppen von ersten Bildelementen geben, die sich jeweils hinsichtlich der optischen Eigenschaften unterscheiden. Beispielsweise kann eine erste Gruppe von ersten Bildelementen in einer der Farben gebildet sein, die für die Konstruktion der individualisierenden Information erforderlich ist, und eine zweite Gruppe von ersten Bildelementen, die weiß oder farbig lumineszierend sind, wenn diese ersten Bildelemente mit UV-Strahlung angeregt werden. Diese weiteren ersten Bildelemente können wiederum eine weitere Information verkörpern, etwa ein nicht individualisierendes Sicherheitsmerkmal, wie ein Wappen oder Guillochen, oder ein individualisierendes Merkmal, beispielsweise den Wert einer Banknote oder die Unterschrift oder den Namen des Dokumenteninhabers. Beispielsweise kann vorgesehen sein, dass die ersten und/oder zweiten Bildelemente allein durch Absorption und Remission (ohne Lumineszenz) eine erste Information verkörpern und dass die ersten und/oder zweiten Bildelemente bei zusätzlicher Lumineszenz (beispielsweise bei zusätzlicher Anregung mit UV-Licht) eine zweite Information verkörpern, indem die durch zusätzliche Lumineszenz gebildeten Bildelemente die erste Information modifizieren/ergänzen, sodass die zweite Information entsteht.

In einer weiteren erfindungsgemäßen Ausführungsform können die ersten Bildelemente mit einem unter Wärme- und/oder Lichteinwirkung expandierbaren Material, beispielsweise mit einem aufschäumbaren Material, gebildet sein. Unter Wärme- oder Lichteinwirkung verändert sich dadurch das erste Muster derart, dass bestimmte erste Bildelemente auf Kosten anderer (benachbarter) erster Bildelemente wachsen, d.h. die anderen (benachbarten) ersten Bildelemente werden verdrängt. Auch dadurch ergibt sich ein geänderter Bildeindruck, der, unabhängig davon, ob darüber zweite Bildelemente gebildet werden, aufgrund der Strahlung erzeugt wird. Dies kann beispielsweise durch ein bei Laserbestrahlung in geeigneter Weise aufschäumendes die ersten Bildpunkte bildendes Material erreicht werden. Somit kann diese Maßnahme zusätzlich zur Erzeugung eines sich dem Betrachter darbietenden Musters, das beispielsweise eine individualisierende Information verkörpert, beitragen.

In einer weiteren Fortbildung der vorstehenden bevorzugten Ausführungsformen der vorliegenden Erfindung sind die ersten Bildelemente aus ersten Bildpunkten und die zweiten Bildelemente aus zweiten Bildpunkten gebildet. Weiterhin sind in diesem Falle, sofern über einem ersten Bildelement ein zweites Bildelement angeordnet ist, nur über einem Teil der ersten Bildpunkte des ersten Bildelements jeweils zweite Bildpunkte des darüber angeordneten zweiten Bildelements passergenau angeordnet. Wenn nämlich beispielsweise jedes erste Bildelement aus ersten Bildpunkten zusammengesetzt ist, die in den Basisfarben eines Standard-Farbraumes (beispielsweise des CYMK-Farbraumes) gebildet sind, können einzelne dieser ersten Bildpunkte durch darüber liegende zweite Bildpunkte von zweiten Bildelementen "ausgeschaltet" werden, oder deren Erscheinung kann von den jeweiligen zweiten Bildpunkten modifiziert werden, um wiederum eine (zusätzliche) Farbinformation an der Stelle des entsprechenden zweiten Bildelements zu erhalten, sodass insgesamt ein farbiges Zielmuster erhalten wird, das die individualisierende Information verkörpert. Grundsätzlich müssen nicht alle ersten Bildelemente von darüber liegenden zweiten Bildelementen in der genannten Art und Weise betroffen sein, sondern gegebenenfalls nur ein Teil davon.

In einer weiteren bevorzugten Ausführungsform der vorliegenden Erfindung können die ersten und die zweiten Bildelemente jeweils in einer oder auch in mehreren Ebenen angeordnet sein: Beispielsweise können die ersten Bildelemente auf die mindestens eine erste Dokumentenlage aufgedruckt sein und zwar nur auf eine Oberfläche der ersten Dokumentenlage oder auch auf beide Oberflächen der mindestens einen ersten Dokumentenlage. Zusätzlich können die ersten Bildelemente mit geeigneten Verfahren auch innerhalb der mindestens einen ersten Dokumentenlage erzeugt werden, etwa mit einem photolithographischen Verfahren, etwa wenn die erste(n) Dokumentenlage(n) aus einem Photopolymer gebildet ist/sind. Liegen mehrere erste Dokumentenlagen vor, so können die ersten Bildelemente in einer Ausführungsform im Dokument unmittelbar aneinander anliegen, etwa wenn die ersten Bildelemente jeweils auf die Oberflächen von zwei ersten Dokumentenlagen aufgebracht sind und diese Oberflächen im Dokument aneinander anliegen. In einer anderen Ausführungsform können die ersten Bildelemente im Dokument voneinander beabstandet gebildet sein, etwa wenn die ersten Bildelemente jeweils auf die Oberflächen von zwei Dokumentenlagen aufgebracht sind und diese Oberflächen im Dokument voneinander beabstandet angeordnet sind. In noch einer weiteren Ausführungsform können die ersten Bildelemente auf einer oder mehreren ersten Dokumentenlagen jeweils auf einer oder auf beiden Oberflächen gebildet sein und/oder innerhalb dieser Dokumentenlagen. Beispielsweise kann eine erste Gruppe der ersten Bildelemente in einer ersten Ebene, beispielsweise auf einer ersten Oberfläche der ersten Dokumentenlage, eine zweite Gruppe der ersten Bildelemente in einer zweiten Ebene, beispielsweise auf einer zweiten Oberfläche der ersten Dokumentenlage, und gegebenenfalls weitere Gruppen der ersten Bildelemente in weiteren Ebenen der ersten Dokumentenlagen gebildet sein. Die jeweiligen Gruppen können sich hinsichtlich einer optischen Eigenschaft unterscheiden, beispielsweise durch ihre Farbe. Beispielsweise können sich alle mit der Farbe Y (gelb) gebildeten ersten Bildelemente in einer ersten Ebene, alle mit der Farbe C (cyan) gebildeten ersten Bildelemente in einer zweiten Ebene, alle mit der Farbe M (magenta) gebildeten ersten Bildelemente in einer dritten Ebene und alle mit der Farbe K (schwarz) gebildeten ersten Bildelemente in einer vierten Ebene befinden. Wenn die jeweiligen Ebenen voneinander beabstandet sind, kann durch eine Verkippung des Dokuments gegenüber der Betrachtungsrichtung ein variierender visueller Gesamteindruck des Sicherheitsmerkmals erhalten werden, weil die zweiten Bildelemente, die die Ansicht der ersten Bildelemente zum Teil modifizieren, dann gegebenenfalls nur einen Teil der jeweiligen ersten Bildelemente abdecken, einen anderen aber seitlich vorstehend noch erkennbar lassen.

In gleicher Weise können auch die zweiten Bildelemente in mehreren Ebenen im Dokument erzeugt werden, beispielsweise auf einer Oberfläche der ersten Dokumentenlage, innerhalb der ersten Dokumentenlage und/oder auf einer oder beiden Oberflächen einer oder von mehreren zweiten Dokumentenlagen und/oder auch innerhalb einer oder von mehreren zweiten Dokumentenlagen. Um zweite Bildelemente nicht nur innerhalb der Dokumentenlage sondern auch an deren Oberfläche(n) zu erzeugen, beispielsweise durch Schwärzung mittels Lasergravur, können zusätzlich auf die erste und/oder zweite Dokumentenlage eine oder mehrere Schichten aufgebracht werden, die beispielsweise laserempfindlich oder photoempfindlich aktiv sind. Auch in diesem Falle können sich unterschiedliche Gruppen von zweiten Bildelementen grundsätzlich in unterschiedlichen Ebenen im Dokument befinden.

Zur Bildung des ersten Musters wird in einer besonders bevorzugten erfindungsgemäßen Ausführungsform ein Druckverfahren eingesetzt. Zur Bildung des zweiten Musters wird in einer besonders bevorzugten erfindungsgemäßen Ausführungsform ein Verfahren eingesetzt, bei dem die zweiten Bildelemente mittels Laserbestrahlung, vorzugsweise mittels Lasergravur, erzeugt werden. Hierzu ist eine hochgenaue Positionierung und Modulation des Laserstrahls über dem Dokument erforderlich. Hierzu können zum einen Referenzpunkte mit vordefinierten Informationen im Dokumentenrohling herangezogen werden, mit deren Hilfe der für die Bildung der zweiten Bildelemente erforderliche Laser präzise positioniert werden kann. Zum anderen kann eine hochpräzise Strahlführungskomponente für den Laserstrahl vorgesehen werden, mit dem eine sehr genaue Führung des Strahles möglich ist. Mit Hilfe der Positionen der Referenzpunkte kann dann die Lasereinheit kalibriert werden. Hierzu wird der Laserstrahl über die Referenzpunkte geführt und die gestreute oder transmittierte Strahlung gemessen, sodass die genaue Lage der Referenzpunkte und damit des Dokuments ermittelt werden kann. Die Position der Referenzpunkte wird an ein Steuergerät übermittelt, das die Strahlführungskomponente steuert.

Die Referenzpunkte können - im Gegensatz zu einer beispielsweise im Übrigen realisierten Gleichverteilung der Farben der ersten Bildelemente/Bildpunkte - zum Beispiel aus einer Häufung von gerasterten ersten Bildelementen/Bildpunkten einer einzelnen Farbe bestehen, die bei der Kalibrierung ermittelt werden. Die Strahlführungskomponente ist stromabwärts von der Laserquelle angeordnet. Sie umfasst zum einen eine Strahlteilerkomponente und stromabwärts zu dieser eine Ablenkeinheit, beispielsweise einen oder mehrere Spiegel, für den Laserstrahl. Der von der Strahlteilerkomponente ausgekoppelte Teilstrahl stammt von der vom Dokumenten-Rohling zurückgeworfenen Laserstrahlung. Dieser Teilstrahl wird auf eine Detektorkomponente gerichtet, mit der die Intensität des Teilstrahles erfasst wird.

Das erfindungsgemäße Wert- und/oder Sicherheitsdokument kann zusätzlich zu der mindestens einen ersten und gegebenenfalls mindestens einen zweiten Dokumentenlage weitere Dokumentenlagen aufweisen. Beispielsweise kann von einer Sichtseite des Dokuments aus gesehen vor der mindestens einen ersten und gegebenenfalls mindestens einen zweiten Dokumentenlage zusätzlich eine transparente oder transluzente Dokumentenlage angeordnet sein.

Ferner kann das erfindungsgemäße Wert- und/oder Sicherheitsdokument eine Trägerlage aufweisen, die von der einen Sichtseite des Dokuments aus gesehen hinter der mindestens einen ersten und gegebenenfalls mindestens einen zweiten Dokumentenlage angeordnet ist.

Ferner können erste und zweite Dokumentenlagen, in und/oder auf denen sich in erfindungsgemäßer Art und Weise erste und zweite Muster befinden, auch jeweils auf beiden Seiten einer Trägerlage im Dokument angeordnet sein, und zusätzlich kann sich auf jeder Seite außenseitig eine transparente oder transluzente Dokumentenlage befinden.

Die Dokumentenlagen werden typischerweise zu einem Stapel zusammengefasst und dann durch Lamination miteinander verbunden.

Zur näheren Erläuterung der Erfindung dienen die nachfolgend beschriebenen Figuren. Diese sollen lediglich ein besseres Verständnis der Erfindung ermöglichen und sind daher in keiner Weise als den Schutzumfang der beanspruchten Erfindung einschränkend zu verstehen. Es zeigen im Einzelnen:
- Fig. 1:: eine schematische Darstellung einer Lasergravurvorrichtung zur Erzeugung des zweiten Musters;
- Fig. 2:: eine Ansicht eines Dokuments und ein dazugehöriger Aufbau in schematischer Darstellung;
- Fig. 3: einen Schnitt durch ein Dokument mit ersten und zweiten Bildelementen in einer ersten erfindungsgemäßen Ausführungsform in einem Ausschnitt;
- Fig. 4:: eine Ausschnittsansicht einer Individualisierungszone eines Dokuments mit ersten und zweiten Bildelementen in einer zweiten erfindungsgemäßen Ausführungsform vor und nach dem Bilden der zweiten Bildelemente;
- Fig. 5: einen Schnitt wie in Fig. 3, allerdings mit einer zusätzlichen Dokumentenlage zwischen der ersten Dokumentenlage und der zweiten Dokumentenlage, in einer dritten Ausführungsform;
- Fig. 6: einen Schnitt durch ein Dokument mit ersten und zweiten Bildelementen in einem Ausschnitt in einer vierten erfindungsgemäßen Ausführungsform;
- Fig. 7: eine Ansicht eines Ausschnittes aus einer Personalisierungszone eines Dokuments vor und nach der Bildung von zweiten Bildelementen;
- Fig. 8: Ausschnitte von Ansichten aus einer Personalisierungszone eines Dokuments.

Gleiche Bezugszeichen bezeichnen in den Figuren Elemente mit gleicher Funktion.

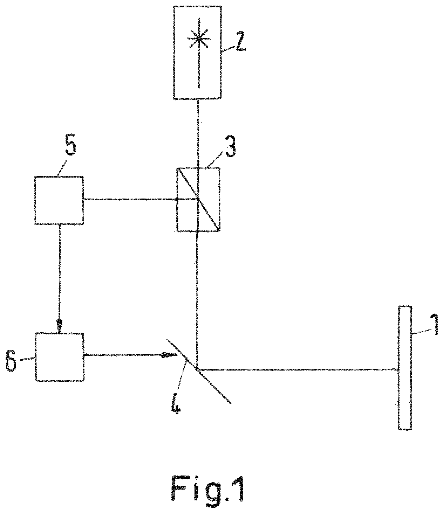

Die in Fig. 1 schematisch gezeigte Lasergravurvorrichtung ist dazu geeignet, in einem Dokumentenrohling 1, der bereits ein erstes (beispielsweise gedrucktes) Muster enthält, ein zweites Muster aus zweiten Bildelementen zu erzeugen. Hierzu umfasst die Vorrichtung einen Laser 2, einen Strahlteiler 3, einen Spiegel 4, einen Detektor 5 und ein Steuergerät 6, mit dem der Spiegel gesteuert, d.h. kalibriert, wird. Der vom Laser ausgehende Laserstrahl durchläuft den Strahlteiler, trifft auf den Spiegel und wird von diesem auf den Dokumentenrohling abgelenkt. Der vom Dokumentenrohling zurücklaufende Laserstrahl wird nach Ablenkung von dem Spiegel im Strahlteiler auf den Detektor umgelenkt und erzeugt dort ein Signal. Bei Ansteuerung der Referenzpunkte auf dem Dokumentenrohling können deren ermittelte tatsächliche Positionen mit den im Steuergerät gespeicherten Positionen verglichen werden, sodass die exakte Lage des Dokumentenrohlings mit dem Steuergerät ermittelt werden kann. Mit diesen Daten kann die Vorrichtung gesteuert werden, um die zweiten Bildelemente im Dokumentenrohling zu erzeugen, um das Dokument fertig zu stellen.

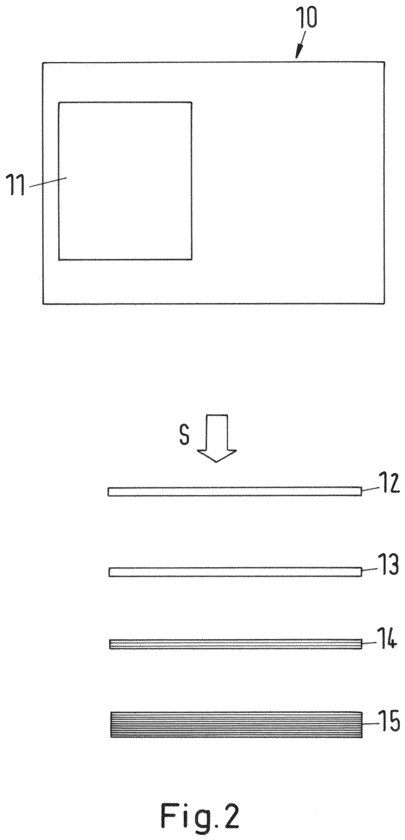

In Fig. 2 ist im oberen Teil eine Ansicht eines Wert- und/oder Sicherheitsdokuments 10, beispielsweise eines Personalausweisdokuments, wiedergegeben. Das Dokument weist eine Zone 11 für eine farbige Personalisierung auf. Im unteren Teil sind die Schichten innerhalb der farbigen Personalisierungszone in schematischer Darstellung gezeigt. Der Pfeil zeigt die Sichtachse S an. An der Sichtseite des Dokuments ist außen liegend eine transparente Lage (Overlay-Folie) 12 angeordnet. Diese Lage ist gegen Laserstrahlung unempfindlich. Unter dieser Lage befindet sich eine zweite Dokumentenlage 13, die durch Laserstrahlung schwärzbar ist und in der Schwärzungen zur Bildung zweiter Bildelemente erzeugt werden. Unter der zweiten Dokumentenlage befindet sich eine erste Dokumentenlage 14, die mit einem geeigneten ersten Muster versehen ist, beispielsweise einem Druckbild, das erste Bildelemente verkörpert. Diese drei Lagen werden von einer Trägerlage 15 getragen. Diese vier Lagen sind in einem Stapel zusammengefasst und durch Lamination miteinander verbunden. Bevor die zweiten Bildelemente in der zweiten Dokumentenlage 13 mittels der Laserstrahlung gebildet werden, liegt ein Dokumentenrohling vor. In diesem Dokumentenrohling befindet sich bereits die mit dem ersten Muster versehene erste Dokumentenlage 14. Durch Erzeugen des zweiten Musters in der ersten Dokumentenlage entsteht das personalisierte Dokument. Das dabei hergestellte Sicherheitsmerkmal ist beispielsweise ein Gesichtbild der Person, der das Personalausweisdokument zugeordnet wird.

In Fig. 3 ist eine erste Ausführungsform eines in erfindungsgemäßer Art und Weise mit ersten und zweiten Bildelementen versehenes Wert- und/oder Sicherheitsdokument 10 in einer Schnittdarstellung gezeigt.

Von der Sichtseite aus gesehen (Pfeil S) befinden sich in dem Laminat des Dokuments 10 eine transparente und gegenüber Laserstrahlung unempfindliche Overlay-Lage 12, darunter eine zweite Dokumentenlage 13, in der mittels Laserstrahlung weiße opake Bereiche gebildet sind, die zweiten Bildelementen 13.1 entsprechen, darunter eine erste Dokumentenlage 14, auf der sich ein Druckbild von in verschiedenen Farben gedruckten Druckpixeln befindet, das erste Bildelemente 14.1, 14.2, 14.3, 14.4, 14.1', 14.2', 14.3', 14.4' darstellt, sowie darunter eine Trägerlage 15. Die Druckpixel sind mit Drucktinten auf die erste Dokumentenlage aufgedruckt und zwar mit den Basisfarben des CYMK-Farbraumes (C-Bildelemente 14.1, 14.1', Y-Bildelemente 14.2, 14.2', M-Bildelemente 14.3,14.3' und K-Bildelemente 14.4, 14.4'). Die weißen zweiten Bildelemente 13.1 decken im vorliegenden Falle die Y-Bildelemente 14.2, 14.2', die M-Bildelemente 14.3, 14.3' und die K-Bildelemente 14.4, 14.4' ab, sodass von der Sichtseite aus gesehen, lediglich die C-Bildelemente 14.1, 14.1' sichtbar sind. Somit sind, abgesehen von der weißen Farbe der zweiten Bildelemente 13.1 lediglich die cyanfarbenen Bildelemente 14.1, 14.1' sichtbar. Die entsprechende Partie in der Personalisierungszone ist demgemäß cyanfarben. Zusammen mit entsprechend gebildeten anderen Bereichen des Dokuments wird eine individualiserende Information aus den nicht abgedeckten ersten Bildelementen gebildet, wobei in den anderen Bereichen auch andere als die ersten C-Bildelemente 14.1, 14.1' sichtbar sind.

In Fig. 4 ist eine Ansicht einer Individualisierungszone eines Wert- und/oder Sicherheitsdokuments in einem Ausschnitt vor der Bildung der zweiten Bildelemente im Dokumentenrohling (oben) und nach der Bildung der zweiten Bildelemente (unten) gezeigt.

Die ersten Bildelemente 14.5 sind auf der ersten Dokumentenlage mit einer im UV-Licht weiß fluoreszierenden Farbe auf einer schwarzen Unterlage gedruckt. Dieses erste Druckmuster ist regelmäßig in Form von Balken, die matrixförmig angeordnet sind. Zur Bildung von zweiten Bildelementen 13.5 in der zweiten darüber liegenden zweiten Dokumentenlage, die laserempfindlich ist, werden opake Schwärzungen an einzelnen Stellen gebildet, die sich über den einzelnen ersten Bildelementen befinden. Durch Verdecken einzelner erster Bildelemente durch die zweiten Bildelemente entsteht bei der Betrachtung im UV-Licht eine weiß fluoreszierende Zifferfolge, hier ,8 1 5', die als Individualisierungsmerkmal für das Dokument verwendet werden kann, etwa als Seriennummer einer Banknote.

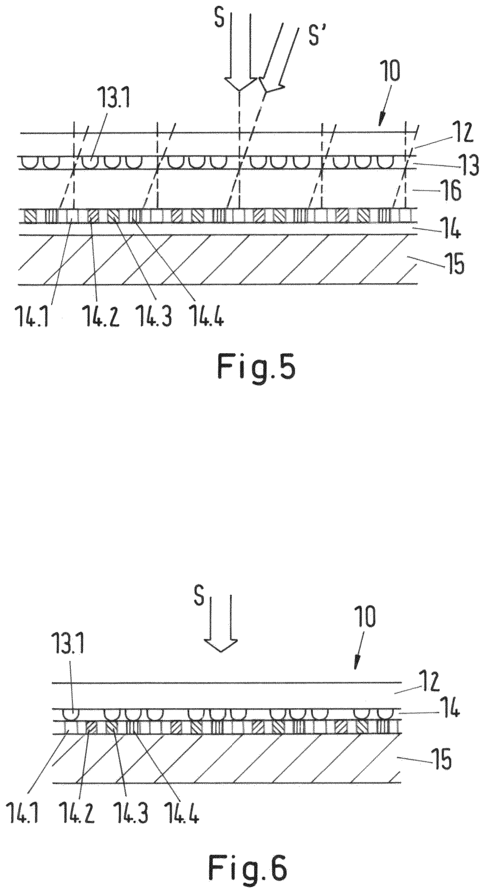

Fig. 5 zeigt wie Fig. 3 eine Schnittdarstellung durch die Personalisierungszone des Wert- und/oder Sicherheitsdokuments 10. In diesem Falle befindet sich zwischen der ersten Dokumentenlage 14 und der zweiten Dokumentenlage 13 eine weitere transparente Dokumentenlage 16, die einen größeren Abstand zwischen den die ersten Bildelemente 14.1, 14.2, 14.3, 14.4 bildenden Druckpixeln auf der ersten Dokumentenlage und den Weißungen 13.1 in der zweiten Dokumentenlage erzeugt. Durch den größeren Abstand zwischen der ersten und der zweiten Dokumentenlage ergeben sich bei der Betrachtung des Dokuments bei einer Verkippung unterschiedliche visuelle Effekte: Bei Betrachtung entlang der Sichtachse S sind lediglich die C-Bildelemente 14.1 sichtbar, während lediglich die K-Bildelemente 14.4 bei Betrachtung entlang der Sichtachse S' sichtbar sind, d.h. der Farbeindruck wird verändert.

Fig. 6 zeigt eine weitere Ausführungsform. Im Unterschied zu den Ausführungsformen von Fig. 3 und 5 sind die zweiten Bildelemente 13.1 in diesem Falle in der ersten Dokumentenlage 14 gebildet. Die Druckpixel, die die ersten Bildelemente 14.1, 14.2, 14.3, 14.4 bilden, sind auf die Unterseite der ersten Dokumentenlage aufgedruckt. Damit liegen sie unter den zweiten Bildelementen. Dadurch ist keine weitere Dokumentenlage zur Erzeugung der zweiten Bildelemente erforderlich. Beide Typen von Bildelementen werden ausschließlich mittels der ersten Dokumentenlage 14 gebildet. Die zweiten Bildelemente verdecken in diesem Falle die C-, Mund K-Druckpixel (14.1, 14.3, 14.4) der ersten Bildelemente, sodass ein gelblicher Bildeindruck entsteht, da ausschließlich die C-Bildelemente 14.2 sichtbar sind.

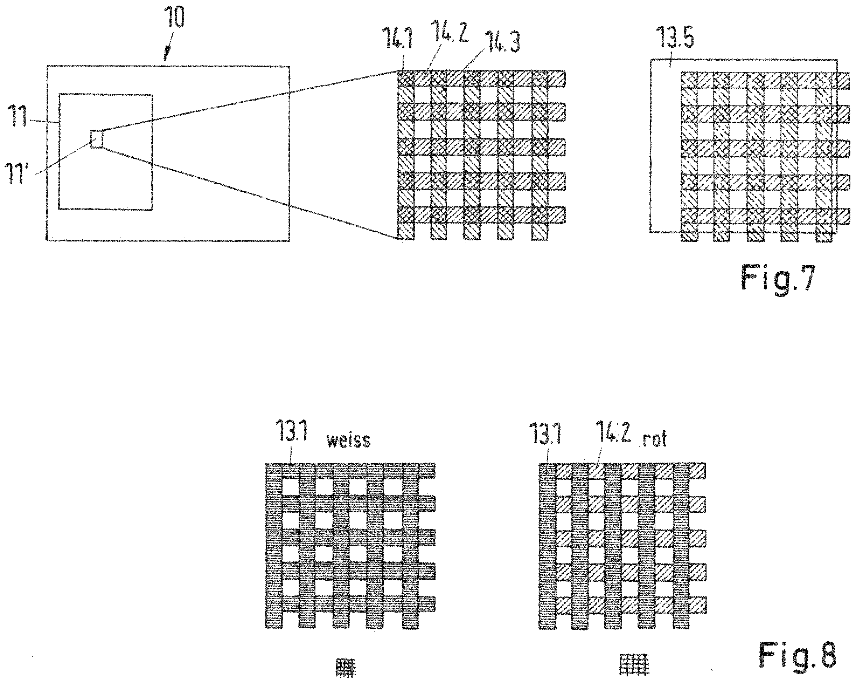

Fig. 7 zeigt einen Ausschnitt einer Personalisierungszone eines Wert- und/oder Sicherheitsdokuments 10 vor und nach der Bildung von zweiten Bildelementen. Links ist das Dokument 10 mit der Personalisierungszone 11 und mit einem Ausschnitt 11' daraus wiedergegeben. Der Ausschnitt ist rechts daneben vergrößert dargestellt (mittlere Darstellung). Der die ersten Bildelemente 14.1, 14.2, 14.3 bildende Druck umfasst grüne (14.1), rote (14.2) und blaue (14.3) Druckpixel. Durch Bildung von zweiten Bildelementen 13.5, hier in Form einer ineinander übergehenden Modifizierung der zweiten Dokumentenlage in einen transluzenten Zustand (rechte Darstellung), wird ein Teil der ersten Bildelemente bei der Betrachtung aufgehellt, weil das einfallende Licht von außen teilweise gestreut und von dem Druck nicht absorbiert wird. Dadurch ergibt sich innerhalb des von den zweiten Bildelementen gebildeten Bereiches ein veränderter hellerer Bildeindruck, während die ersten Bildelemente außerhalb dieses Bereiches nicht verändert sind.

In Fig. 8 sind zwei weitere Beispiele für eine Modifizierung des visuellen Gesamtbildes durch die zweiten Bildelemente 14.1, 14.2, 14.3 aus Fig. 7 gezeigt. Auch in diesem Falle ist lediglich der in Fig. 7 gezeigte Ausschnitt 11' vergrößert und darunter jeweils in der tatsächlichen Ansicht ohne Vergrößerung wiedergegeben.

In der linken Darstellung in Fig. 8 sind alle ersten Bildelemente 14.1, 14.2, 14.3 von durch Schwärzung der zweiten Dokumentenlage gebildeten zweiten Bildelementen 13.1 verdeckt, sodass nur noch die weißen Zwischenräume zwischen den ersten Bildelementen sichtbar sind. Der visuelle Eindruck ist grau.

In der rechten Darstellung sind die grünen (14.1) und blauen (14.3) ersten Bildelemente von schwarzen zweiten Bildelementen 13.1 verdeckt, während die roten ersten Bildelemente 14.2 unverdeckt bleiben. Dadurch ergibt sich insgesamt eine rote Färbung des Ausschnittsbereiches.

## Patentansprüche

1. Wert- und/oder Sicherheitsdokument (10), umfassend ein in einer oder mehreren ersten Ebenen angeordnetes und aus ersten Bildelementen (14.1, 14.2, 14.3, 14.4, 14.5) gebildetes erstes Muster und ein in einer oder mehreren zweiten Ebenen und aus zweiten Bildelementen (13.1, 13.5) gebildetes und zu den ersten Bildelementen (14.1, 14.2, 14.3, 14.4, 14.5) des ersten Musters passergenau angeordnetes zweites Muster, wobei sich die zweiten Bildelemente (13.1, 13.5) von einer Sichtseite des Dokuments (10) aus gesehen vor den ersten Bildelementen (14.1, 14.2, 14.3, 14.4, 14.5) befinden, wobei nur über einem Teil der ersten Bildelemente (14.1, 14.2, 14.3, 14.4, 14.5) jeweils ein zweites Bildelement (13.1, 13.5) angeordnet ist, **dadurch gekennzeichnet, dass** die ersten Bildelemente (14.1, 14.2, 14.3, 14.4, 14.5) in einer regelmäßigen Anordnung unter Ausbildung eines für Dokumente (10) desselben Typs jeweils identischen Musters gebildet sind und wobei die zweiten Bildelemente (13.1, 13.5) mit den ersten Bildelementen (14.1, 14.2, 14.3, 14.4, 14.5) zusammen eine individualisierende Information bilden.

2. Wert- und/oder Sicherheitsdokument (10) nach Anspruch 1, **dadurch gekennzeichnet, dass** sich das erste Muster in und/oder auf einer ersten Dokumentenlage (14) des Dokuments befindet und dass sich das zweite Muster in und/oder auf der mindestens einen ersten Dokumentenlage (14) und/oder in und/oder auf mindestens einer zweiten Dokumentenlage (13) befindet.

3. Wert- und/oder Sicherheitsdokument (10) nach einem der vorstehenden Ansprüche, **dadurch gekennzeichnet, dass** die ersten Bildelemente (14.1, 14.2, 14.3, 14.4, 14.5) farbig sind.

4. Wert- und/oder Sicherheitsdokument (10) nach einem der vorstehenden Ansprüche, **dadurch gekennzeichnet, dass** eine Kombination aus ersten Bildelementen (14.1, 14.2, 14.3, 14.4, 14.5) und zweiten Bildelementen (13.1, 13.5) eine farbige Darstellung ergibt.

5. Wert- und/oder Sicherheitsdokument (10) nach einem der vorstehenden Ansprüche, **dadurch gekennzeichnet, dass** die zweiten Bildelemente (13.1, 13.5) durch Schwärzung mindestens einer ersten und/oder zweiten Dokumentenlage (13, 14) gebildet sind.

6. Wert- und/oder Sicherheitsdokument (10) nach einem der vorstehenden Ansprüche, **dadurch gekennzeichnet, dass** die zweiten Bildelemente (13.1, 13.5) unter Lasereinwirkung in mindestens einer Dokumentenlage (13, 14) erzeugt sind.

7. Wert- und/oder Sicherheitsdokument (10) nach einem der vorstehenden Ansprüche, **dadurch gekennzeichnet, dass** das Dokument (10) im Bereich der zweiten Bildelemente (13.1, 13.5) opak ist.

8. Wert- und/oder Sicherheitsdokument (10) nach einem der Ansprüche 2-7, **dadurch gekennzeichnet, dass** die ersten Bildelemente (14.1, 14.2, 14.3, 14.4, 14.5) auf die mindestens eine erste Dokumentenlage (13) aufgedruckt sind.

9. Wert- und/oder Sicherheitsdokument (10) nach einem der vorstehenden Ansprüche, **dadurch gekennzeichnet, dass** die ersten Bildelemente (14.1, 14.2, 14.3, 14.4, 14.5) nach Anregung im UV-Spektralbereich im sichtbaren Spektralbereich lumineszierend sind.

10. Wert- und/oder Sicherheitsdokument (10) nach einem der vorstehenden Ansprüche, **dadurch gekennzeichnet, dass** die ersten Bildelemente (14.1, 14.2, 14.3, 14.4, 14.5) mit einem unter Wärme- und/oder Lichteinwirkung expandierbaren Material gebildet sind.

11. Wert- und/oder Sicherheitsdokument (10) nach einem der vorstehenden Ansprüche, **dadurch gekennzeichnet, dass** die ersten Bildelemente (14.1, 14.2, 14.3, 14.4, 14.5) aus ersten Bildpunkten und die zweiten Bildelemente (13.1, 13.5) aus zweiten Bildpunkten gebildet sind und dass, sofern über einem ersten Bildelement (14.1, 14.2, 14.3, 14.4, 14.5) ein zweites Bildelement angeordnet ist, nur über einem Teil der ersten Bildpunkte des ersten Bildelements (14.1, 14.2, 14.3, 14.4, 14.5) jeweils zweite Bildpunkte des darüber angeordneten zweiten Bildelements (13.1, 13.5) passergenau angeordnet sind.

12. Verfahren zum Herstellen eines mindestens eine Dokumentenlage aufweisenden Wert- und/oder Sicherheitsdokuments (10), umfassend folgende Verfahrensschritte:
(a) Herstellen eines Dokumentenrohlings durch Erzeugen eines in einer oder mehreren ersten Ebenen angeordneten und aus ersten Bildelementen gebildeten ersten Musters in und/oder auf mindestens einer ersten der mindestens einen Dokumentenlage des Dokumentenrohlings, wobei die ersten Bildelemente in einer regelmäßigen Anordnung gebildet sind und wobei das erste Muster für Dokumente desselben Typs jeweils identisch ist, und
(b) Erzeugen eines in einer oder mehreren zweiten Ebenen angeordneten und aus zweiten Bildelementen gebildeten und mit den ersten Bildelementen des ersten Musters passergenau angeordneten zweiten Musters in und/oder auf der mindestens einen ersten Dokumentenlage und/oder in und/oder auf mindestens einer zweiten der mindestens einen Dokumentenlage, wobei die zweiten Bildelemente mit den ersten Bildelementen zusammen eine individualisierende Information bilden, wobei nur über einem Teil der ersten Bildelemente (14.1, 14.2, 14.3, 14.4, 14.5) in Verfahrensschritt (b) jeweils ein zweites Bildelement (13.1, 13.5) erzeugt wird oder wobei in Verfahrensschritt (b) nur über einem Teil der ersten Bildelemente (14.1, 14.2, 14.3, 14.4, 14.5) jeweils ein bereits vorhandenes zweites Bildelement (13.1, 13.5) entfernt wird, sodass über einem komplementären Teil der ersten Bildelemente (14.1, 14.2, 14.3, 14.4, 14.5) zweite Bildelemente (13.1, 13.5) verbleiben.

13. Verfahren nach Anspruch 12, **dadurch gekennzeichnet, dass** die mindestens eine erste Dokumentenlage (14) nach Verfahrensschritt (a) und vor Verfahrensschritt (b) mit weiteren Dokumentenlagen (12, 13, 15) zu einem Laminat verbunden werden, sodass die mindestens eine erste Dokumentenlage (14) zwischen den anderen Dokumentenlagen (12, 13, 15) integriert ist.

## Claims

1. A document of value and/or security document (10), comprising a first pattern, which is arranged in one or more first planes and is formed of first image elements (14.1, 14.2, 14.3, 14.4, 14.5), and a second pattern, which is formed in one or more second planes and from second image elements (13.1, 13.5) and is arranged in perfect register relative to the first image elements (14.1, 14.2, 14.3, 14.4, 14.5) of the first pattern, wherein the second image elements (13.1, 13.5) are disposed in front of the first image elements (14.1, 14.2, 14.3, 14.4, 14.5) as considered from a viewing side of the document (10), wherein the second image elements (13.1, 13.5) are each arranged only over parts of the first image elements (14.1, 14.2, 14.3, 14.4, 14.5), **characterised in that** the first image elements (14.1, 14.2, 14.3, 14.4, 14.5) are formed in a regular arrangement, thus forming a pattern identical for documents (10) of the same type, and wherein the second image elements (13.1, 13.5) together with the first image elements (14.1, 14.2, 14.3, 14.4, 14.5) form a piece of individualising information.

2. The document of value and/or security document (10) according to claim 1, **characterised in that** the first pattern is disposed in and/or on a first document layer (14) of the document, and **in that** the second pattern is disposed in and/or on the at least one first document layer (14) and/or in and/or on at least one second document layer (13).

3. The document of value and/or security document (10) according to either one of the preceding claims, **characterised in that** the first image elements (14.1, 14.2, 14.3, 14.4, 14.5) are coloured.

4. The document of value and/or security document (10) according to any one of the preceding claims, **characterised in that** a combination of first image elements (14.1, 14.2, 14.3, 14.4, 14.5) and second image elements (13.1, 13.5) gives a coloured display.

5. The document of value and/or security document (10) according to any one of the preceding claims, **characterised in that** the second image elements (13.1, 13.5) are formed by blackening at least one first and/or second document layer (13, 14).

6. The document of value and/or security document (10) according to any one of the preceding claims, **characterised in that** the second image elements (13.1, 13.5) are produced in at least one document layer (13, 14) under the action of a laser.

7. The document of value and/or security document (10) according to any one of the preceding claims, **characterised in that** the document (10) is opaque in the region of the second image elements (13.1, 13.5).

8. The document of value and/or security document (10) according to any one of claims 2 to 7, **characterised in that** the first image elements (14.1, 14.2, 14.3, 14.4, 14.5) are printed on the at least one first document layer (13).

9. The document of value and/or security document (10) according to any one of the preceding claims, **characterised in that** the first image elements (14.1, 14.2, 14.3, 14.4, 14.5) are luminescent in the visible spectral range following excitation in the UV spectral range.

10. The document of value and/or security document (10) according to any one of the preceding claims, **characterised in that** the first image elements (14.1, 14.2, 14.3, 14.4, 14.5) are formed with a material that is expandable under the action of heat and/or light.

11. The document of value and/or security document (10) according to any one of the preceding claims, **characterised in that** the first image elements (14.1, 14.2, 14.3, 14.4, 14.5) are formed of first pixels and the second image elements (13.1, 13.5) are formed of second pixels, and **in that**, provided a second image element is arranged above a first image element (14.1, 14.2, 14.3, 14.4, 14.5), second pixels of the second image element (13.1, 13.5) arranged above the first image element (14.1, 14.2, 14.3, 14.4, 14.5) are arranged in perfect register above only some of the first pixels of said first image element.

12. A method for producing a document of value and/or security document (10) having at least one document layer, said method comprising the following method steps:
(a) producing a document blank by generating a first pattern, which is arranged in one or more first planes and is formed of first image elements, in and/or on at least a first one of the at least one document layer of the document blank, wherein the first image elements are formed in a regular arrangement, and wherein the first pattern is identical for documents of the same type, and
(b) generating a second pattern, which is arranged in one or more second planes and is formed of second image elements and is arranged in perfect register relative to the first image elements of the first pattern, in and/or on the at least one first document layer and/or in and/or on at least a second one of the at least one document layer, wherein the second image elements together with the first image elements form a piece of individualising information, wherein, in method step (b), a second image element (13.1, 13.5) is generated in each case over only part of the first image elements (14.1, 14.2, 14.3, 14.4, 14.5), or wherein, in method step (b), a second image element (13.1, 13.5) already provided is in each case removed above part of the first image elements (14.1, 14.2, 14.3, 14.4, 14.5), such that second image elements (13.1, 13.5) remain above a complementary part of the first image elements (14.1, 14.2, 14.3, 14.4, 14.5).

13. The method according to claim 12, **characterised in that** after method step (a) and before method step (b) the at least one first document layer (14) is connected to further document layers (12, 13, 15) to form a laminate, such that the at least one first document layer (14) is integrated between the other document layers (12, 13, 15).

## Revendications

1. Document de valeur et/ou de sécurité (10), comprenant un premier motif disposé dans un ou plusieurs premiers niveaux et formé à partir de premiers éléments d'image (14.1, 14.2, 14.3, 14.4, 14.5) et un deuxième motif formé dans un ou plusieurs deuxièmes niveaux et à partir de deuxièmes éléments d'image (13.1, 13.5) et disposés selon un ajustement précis par rapport aux premiers éléments d'image (14.1, 14.2, 14.3, 14.4, 14.5) du premier motif, dans lequel les deuxièmes éléments d'image (13.1, 13.5) se trouvent, vus depuis un côté visible du document (10), devant les premiers éléments d'image (14.1, 14.2, 14.3, 14.4, 14.5), dans lequel respectivement un deuxième élément d'image (13.1, 13.5) est disposé seulement sur une partie des premiers éléments d'image (14.1, 14.2, 14.3, 14.4, 14.5), **caractérisé en ce que** les premiers éléments d'image (14.1, 14.2, 14.3, 14.4, 14.5) sont formés selon un agencement régulier en réalisant un motif respectivement identique pour des documents (10) du même type et dans lequel les deuxièmes éléments d'image (13.1, 13.5) forment conjointement avec les premiers éléments d'image (14.1, 14.2, 14.3, 14.4, 14.5) une information d'individualisation.

2. Document de valeur et/ou de sécurité (10) selon la revendication 1, **caractérisé en ce que** le premier motif se trouve dans et/ou sur une première couche de document (14) du document, et que le deuxième motif se trouve dans et/ou sur l'au moins une première couche de document (14) et/ou dans et/ou sur au moins une deuxième couche de document (13).

3. Document de valeur et/ou de sécurité (10) selon l'une quelconque des revendications précédentes, **caractérisé en ce que** les premiers éléments d'image (14.1, 14.2, 14.3, 14.4, 14.5) sont colorés.

4. Document de valeur et/ou de sécurité (10) selon l'une quelconque des revendications précédentes, **caractérisé en ce qu'**une combinaison composée de premiers éléments d'image (14.1, 14.2, 14.3, 14.4, 14.5) et de deuxièmes éléments d'image (13.1, 13.5) donne lieu à une représentation colorée.

5. Document de valeur et/ou de sécurité (10) selon l'une quelconque des revendications précédentes, **caractérisé en ce que** les deuxièmes éléments d'image (13.1, 13.5) sont formés par noircissement d'au moins une première et/ou deuxième couche de document (13, 14).

6. Document de valeur et/ou de sécurité (10) selon l'une quelconque des revendications précédentes, **caractérisé en ce que** les deuxièmes éléments d'image (13.1, 13.5) sont générés par l'action d'un laser dans au moins une couche de document (13, 14).

7. Document de valeur et/ou de sécurité (10) selon l'une quelconque des revendications précédentes, **caractérisé en ce que** le document (10) est opaque dans la zone des deuxièmes éléments d'image (13.1, 13.5).

8. Document de valeur et/ou de sécurité (10) selon l'une quelconque des revendications 2 - 7, **caractérisé en ce que** les premiers éléments d'image (14.1, 14.2, 14.3, 14.4, 14.5) sont imprimés sur l'au moins une première couche de document (13).

9. Document de valeur et/ou de sécurité (10) selon l'une quelconque des revendications précédentes, **caractérisé en ce que** les premiers éléments d'image (14.1, 14.2, 14.3, 14.4, 14.5) sont luminescents dans la plage du spectre visible après l'excitation dans la plage du spectre UV.

10. Document de valeur et/ou de sécurité (10) selon l'une quelconque des revendications précédentes, **caractérisé en ce que** les premiers éléments d'image (14.1, 14.2, 14.3, 14.4, 14.5) sont formés avec un matériau expansible sous l'effet de la chaleur et/ou de la lumière.

11. Document de valeur et/ou de sécurité (10) selon l'une quelconque des revendications précédentes, **caractérisé en ce que** les premiers éléments d'image (14.1, 14.2, 14.3, 14.4, 14.5) sont formés à partir de premiers points d'image et les deuxièmes éléments d'image (13.1, 13.5) sont formés à partir de deuxièmes points d'image, et que, dans la mesure où un deuxième élément d'image est disposé au-dessus d'un premier élément d'image (14.1, 14.2, 14.3, 14.4, 14.5), respectivement des deuxièmes points d'image du deuxième élément d'image (13.1, 13.5) disposé par-dessus sont disposés selon un ajustement précis seulement au-dessus d'une partie des premiers points d'image du premier élément d'image (14.1, 14.2, 14.3, 14.4, 14.5).

12. Procédé servant à fabriquer un document de valeur et/ou de sécurité (10) présentant au moins une couche de document, comprenant des étapes de procédé suivantes :
(a) de fabrication d'une ébauche de document en générant un premier motif disposé dans un ou plusieurs premiers niveaux et formé à partir de premiers éléments d'image dans et/ou sur au moins une première de l'au moins une couche de document de l'ébauche de document, dans lequel les premiers éléments d'image sont formés selon un agencement régulier et dans lequel le premier motif est respectivement identique pour des documents du même type, et
(b) de génération d'un deuxième motif disposé dans un ou plusieurs deuxièmes niveaux et formé à partir de deuxièmes éléments d'image et disposés selon un ajustement précis avec les premiers éléments d'image du premier motif dans et/ou sur l'au moins une première couche de document et/ou dans et/ou sur au moins une deuxième couche de l'au moins une couche de document, dans lequel les deuxièmes éléments d'image forment conjointement avec les premiers éléments d'image une information d'individualisation, dans lequel respectivement un deuxième élément d'image (13.1, 13.5) est généré seulement au-dessus d'une partie des premiers éléments d'image (14.1, 14.2, 14.3, 14.4, 14.5) lors de l'étape de procédé (b) ou dans lequel respectivement un deuxième élément d'image (13.1, 13.5) déjà présent est supprimé lors de l'étape de procédé (b) seulement au-dessus d'une partie des premiers éléments d'image (14.1, 14.2, 14.3, 14.4, 14.5) si bien que des deuxièmes éléments d'image (13.1, 13.5) restent au-dessus d'une partie complémentaire des premiers éléments d'image (14.1, 14.2, 14.3, 14.4, 14.5).

13. Procédé selon la revendication 12, **caractérisé en ce que** l'au moins une première couche de document (14) est assemblée après l'étape de procédé (a) et avant l'étape de procédé (b) à des couches de document (12, 13, 15) supplémentaires en un stratifié si bien que l'au moins une première couche de document (14) est intégrée entre les autres couches de document (12, 13, 15).
